# EUROPÄISCHE PATENTSCHRIFT

(11) **EP 1 306 352 B1**
(45) Veröffentlichungstag und Bekanntmachung des Hinweises auf die Patenterteilung: **03.01.2007**
(21) Anmeldenummer: 02023807.7
(22) Anmeldetag: 23.10.2002
(51) Int. Cl.: C02F 11/12, F26B 17/20

(54) **Vorrichtung zum Trocknen von Schlamm mit einer Heizeinrichtung in einer Transporteinrichtung**
Assembly for drying sludge comprising a heating appliance within a conveying device
Dispositif de séchage de boues comprenant un appareil de chauffage dans un système de transport

(30) Priorität: 23.10.2001 DE 10152033
(43) Veröffentlichungstag der Anmeldung: 02.05.2003
(73) Patentinhaber: VTA Verfahrenstechnische Anlagen GmbH, 94469 Deggendorf (DE)
(72) Erfinder: Hasenkopf, Faten, 94526 Metten (DE)
(74) Vertreter: Schohe, Stefan

(56) Entgegenhaltungen:
- EP-A- 0 588 152
- DE-A- 10 002 535
- US-A- 4 872 998
- PATENT ABSTRACTS OF JAPAN vol. 014, no. 115 (C-0696), 5. März 1990 (1990-03-05) & JP 01 315399 A (TAKUMA CO LTD), 20. Dezember 1989 (1989-12-20)

## Beschreibung

Die Erfindung betrifft eine Vorrichtung zum Trocknen von Schlamm, insbesondere von Klär- oder Faulschlamm, mit einer Transporteinrichtung zum Fördern des Schlamms zwischen einem Produkteintrag und einem Produktaustrag, und einer Heizeinrichtung zum Aufheizen des Schlamms in der Transporteinrichtung, wobei die Transporteinrichtung wenigstens einen

Trog umfaßt, und wobei in einem Innenraum des wenigstens einen Trogs eine Transportschnecke mit Flügeln zum Umwälzen und Fördern des Schlamms angeordnet ist.

Derartige Vorrichtungen werden benutzt, um den in Kläranlagen anfallenden Klär- bzw. Faulschlamm mit hoher Schadstoffbeladung und großem Wassergehalt für eine Deponierung vorzubereiten. Auch kontaminiertes Erdreich, wie es beispielsweise nach einem Chemieunfall, einem Müllunfall oder dergleichen abgetragen wird, kann in einer solchen Vorrichtung behandelt werden.

Aus der Druckschrift G 88 16 171 ist eine Vorrichtung der eingangs beschriebenen Art bekannt. Der zu trocknende Schlamm, welcher zuvor beispielsweise im Rahmen einer Entwässerung behandelt sein kann, wird über den Produkteintrag in einem Trog eingebracht. In dem Trog ist eine Schneckenwelle angeordnet, die mit Hilfe einer Drehbewegung den eingebrachten Schlamm fördert. Gemäß der bekannten Vorrichtung sind mehrere Tröge in einer Kaskade übereinander angeordnet. Der zu trocknende Schlamm gelangt entlang der Kaskade von dem Produkteintrag zu einem Produktaustrag. Hierbei wird der Schlamm in den Trögen jeweils von einem Trogeintrag zu einem Trogaustrag gefördert. Von dem Trögaustrag eines übergeordneten Trogs gelangt der Schlamm in den Trogeintrag eines darunterliegenden Trogs. Zwischen dem Trogaustrag des übergeordneten Trogs und dem Trogeintrag des darunterliegenden Trogs ist zur Führung des Schlamms ein Zwischenabschnitt ausgebildet.

Um den Schlamm zu trocknen, werden sowohl die Tröge als auch die Transportschnecken beheizt, so daß der Schlamm erhitzt wird und Wasserbestandteile verdampfen. Zu diesem Zweck sind Trogwände doppelwandig ausgebildet, so daß die Trogwände von einem erhitzen Medium, insbesondere Öl durchströmt werden können. Des weiteren ist vorgesehen, daß eine Welle der Transportschnecken ebenfalls doppelwandig ausgebildet ist, so daß die Welle von dem erhitzten Medium durchströmt werden kann.

Beim Erhitzen des Schlamms entstehen Brüden, die mit Hilfe einer Absaugeinrichtung abgesaugt werden. Zu diesem Zweck ist jeder der Tröge mit der Absaugeinrichtung verbunden.

Aus DE 100 02 535 A1 ist eine Vorrichtung zum Trocknen von Schlamm gemäß dem Oberbegriff des Anspruchs 1 bekannt. Nach der Lehre dieser Druckschrift ist oberhalb der Transportschnecke eine weitere Transportschnecke zum Umwälzen des Schlamms angeordnet, wobei am Umfang der Schneckenflügel einer der beiden Transportschnecken oder beider Transportschnecken Paddel ausgebildet sein können.

Aufgabe der vorliegenden Form ist es, eine verbesserte Vorrichtung der eingangs beschriebenen Art mit einer erhöhten Effizienz hinsichtlich der Schlammtrocknung zu schaffen.

Diese Aufgabe wird bei einer Vorrichtung gemäß dem Oberbegriff des Anspruchs 1 erfindungsgemäß dadurch gelöst, daß im Innenraum des wenigstens einen Trogs wenigstens eine Paddelwelle mit Paddeln zum Umwälzen des Schlamms vorgesehen ist.

Bei der Trocknung des Schlamms ist es von wesentlicher Bedeutung, daß der zu trocknende Schlamm so weit wie möglich verkleinert wird, da der Schlamm hierdurch leichter mit Hilfe der Heizeinrichtung aufgeheizt und somit getrocknet werden kann. Ein wichtiger Vorteil, welcher mit der Erfindung gegenüber dem Stand der Technik erreicht ist, besteht darin, daß mit Hilfe der Paddel der wenigstens einen Paddelwelle eine zusätzliche Zerkleinerung des Trockenguts erreicht wird. Der Wärmeübergang auf das Trockengut ist um so besser je kleiner die Brocken des Trockenguts sind:

Neben der verbesserten Zerkleinerung ergibt sich bei der Erfindung weiterhin der Vorteil, daß eine wesentlich bessere Durchmischung des zu trocknenden Schlamms stattfindet. Auf diese Weise werden immer neue Trockengutteile mit der Heizeinrichtung in Kontakt gebracht und hierdurch getrocknet. Die kontinuierliche Durchmischung des Schlamms führt dazu, daß Teilchen des Schlamms, die zunächst von anderen Teilchen des Schlamms so umgeben sind, daß sie nicht mit den beheizten Flächen, z.,B. beheizten Trögen oder Schneckenflügeln, in Kontakt treten, freigelegt werden, so daß auch diese Teilchen getrocknet werden können. Das kontinuierliche Umwälzen mit Hilfe der Paddelwelle verhindert die Bildung größerer Klumpungen in den Trögen, welche die Effektivität des Trocknungsprozesses vermindern.

Die Erfindung kann vorsehen, daß der wenigstens eine Trog thermisch isoliert ist.

Eine zweckmäßige Weiterbildung der Erfindung sieht vor, daß die Paddelwelle oberhalb der Transportschnecke angeordnet ist. Hierdurch wird der Querschnitt der Tröge quer zur Längsrichtung der Transportschnecke möglichst gering gehalten. Dieses hat den Vorteil, daß eine möglichst kleine Ausdampffläche erreicht ist, was im Zusammenhang mit der Gestaltung von Absaugeinrichtungen zum Absaugen der bei der Trocknung des Schlamms entstehenden Brüden zweckmäßig ist.

Zur Verbesserung der Umwälzung des Trockenguts sieht eine vorteilhafte Ausgestaltung der Erfindung vor, daß beim Umwälzen des Schlamms die Paddel der Paddelwelle mit den Flügeln der Transportschnecke ineinander greifen.

Um das Trockengut möglichst effektiv umzuwälzen und innerhalb des Trogs zu fördern, kann bei einer Fortbildung der Erfindung vorgesehen sein, daß neben der Transportschnecke wenigstens eine weitere Transportschnecke vorgesehen ist, daß die Transportschecke und die wenigstens eine weitere Transportschnecke in einer horizontalen Ebene nebeneinander angeordnet sind und daß oberhalb der wenigstens eine weitere Transportschnecke zumindest eine weitere Paddelwelle mit Paddeln zum Umwälzen des Schlamms angeordnet ist.

Zur Verbesserung der Wirkung der Paddelwellen sieht eine zweckmäßige Ausführungsform der Erfindung vor, daß beim Umwälzen des Schlamms die Paddel der einen Paddelwelle und die Paddel der zumindest einen weiteren Paddelwelle ineinander greifen.

Das vorteilhafte Zusammenwirken von Transportschnecke und Paddelwelle ist bei einer Ausführungsform der Erfindung dadurch besonders zweckmäßig gestaltet, daß die Paddelwelle oberhalb der Transportschnecke und die zumindest eine weitere Paddelwelle oberhalb der wenigstens einen weiteren Transportschnecke so angeordnet sind, daß eine Mittelachse der Paddelwelle in Längsrichtung und eine Mittelachse der Transportschnecke in Längsrichtung sowie eine Mittelachse der zumindest einen weiteren Paddelwelle in Längsrichtung und eine Mittelachse der wenigstens einen weiteren in Längsrichtung jeweils im wesentlichen in einer vertikalen Ebene liegen.

Zur Verbesserung der Durchmischung des Trockenguts kann ergänzend vorgesehen sein, daß die Paddel der zumindest einen weiteren Paddelwelle und die Flügel der wenigstens einen weiteren Transportschnecke beim Umwälzen des Schlamms jeweils ineinander kämmen. Hierdurch wird die Dicke von Klumpen des Trockenguts wesentlich vermindert, beispielsweise um die Hälfte.

Bei einer zweckmäßigen Fortbildung der Erfindung kann vorgesehen sein, daß die Transportschnecke und/oder die wenigstens eine weitere Transportschnecke jeweils als eine Schnekkenwelle ausgebildet sind, wodurch eine mechanisch stabile und der hohen Beanspruchung bei der Förderung des Schlamms in den Trögen genügende Transportschnecke geschaffen ist.

Bei einer Ausgestaltung der Erfindung ist vorgesehen, daß die Transportschnecke und die wenigstens eine weitere Transportschnecke mechanisch miteinander gekoppelt sind, wodurch die Drehbewegung der Transportschnecke und der wenigstens einen weiteren Transportschnecke aufeinander so abgestimmt werden können, daß der Schlamm optimal gefördert und somit getrocknet wird. Darüber hinaus ist es auf diese Weise möglich, die Transportschnecke und die wenigstens einer weiteren Transportschnecke mit Hilfe eines einzelnen Getriebes anzutreiben.

Eine vorteilhafte Weiterbildung der Erfindung sieht vor, daß die Transportschnecke und die wenigstens eine weitere Transportschnecke so miteinander gekoppelt sind, daß die Transportschnecke und die wenigstens eine weitere Transportschnecke mit einer gemeinsamen Drehgeschwindigkeit drehbar sind. Hierdurch ist eine kontinuierliche und gleichmäßige Förderung des Schlamms in den Trögen ermöglicht.

Eine zweckmäßige Ausgestaltung der Erfindung kann vorsehen, daß die Transportschnecke und die wenigstens eine weitere Transportschnecke so miteinander gekoppelt sind, daß eine Drehrichtung der Transportschnecke entgegengesetzt zu einer Drehrichtung der wenigstens einer weiteren Transportschnecke ausgebildet ist, wodurch die Umwälzung des Schlamms in den Trögen optimiert wird.

Eine zweckmäßige Fortbildung der Erfindung sieht vor, daß die Transportschnecke und die wenigstens eine weiter Transportschnecke mittels einer Zahnradverbindung miteinander gekoppelt sind. Hierdurch ist zwischen den Transportschnecken eine mechanisch stabile und verschleißfeste Kopplung geschaffen.

Bei einer vorteilhaften Ausgestaltung der Erfindung ist die Zahnradverbindung mit Hilfe eines Zahnradpaares ausgebildet, wobei das Zahnradpaar ein Übersetzungsverhältnis von 1:1 aufweist. Hierdurch ist zwischen den Transportschnecken eine mechanisch einfache Kopplung geschaffen, die gewährleistet, daß die Transportschnecken mit derselben Drehzahl pro Zeiteinheit bewegt werden.

Um einen Modulaufbau der Vorrichtung zum Trocknen von Schlamm zu unterstützen, kann bei einer Weiterbildung der Erfindung vorgesehen sein, daß die Transportschnecke mit einem Aufsteckgetriebe zum Antreiben einer Drehbewegung der Transportschnecke kraftschlüssig verbunden ist.

Eine zweckmäßige Ausführungsform der Erfindung sieht vor, daß die Drehrichtung der Transportschnecke und die Drehrichtung der wenigstens einen weiteren Transportschnecke mindestens kurzzeitig jeweils umkehrbar sind, so daß die Förderung des Schlamms wenigstens teilweise umgekehrt wird. Mit Hilfe der Umkehrbarkeit der jeweiligen Drehrichtung kann eine längere Verweildauer des Schlamms in einem Trog erreicht werden, so daß die Schlammpartikel für eine längere Zeit erhitzt werden, um den Trocknungsprozeß des Schlamms zu optimieren. Darüber hinaus, bewirkt eine kurzzeitige Umkehr der Drehrichtung eine intensivere Durchmischung des Schlamms.

Bei einer bevorzugten Ausgestaltung der Erfindung sind die Flügel der Transportschnecke und/oder die Flügel der wenigstens einen weiteren Transportschnecke beheizt, wodurch die beheizte Fläche vergrößert ist, die zum Erhitzen und somit zur Trocknung des Schlamms in dem Trog genutzt wird.

Bei einer Fortbildung der Erfindung sind die Flügel der Transportschnecke bzw. die Flügel der wenigstens einen weiteren Transportschnecke wenigstens in Teilbereichen jeweils doppelwandig ausgebildet, so daß die Flügel der Transportschnecke bzw. die Flügel der wenigstens einen weiteren Transportschnecke zum Beheizen von einem Medium durchströmt werden können. Hierdurch kann in den Flügeln jeweils ein erhitztes Medium eingebracht werden, beispielsweise Öl, um den Trockungsprozeß des Schlamms zu unterstützen.

Die Erfindung sieht insbesondere auch eine Vorrichtung zum Trocknen von Schlamm, insbesondere Klär- oder Faulschlamm, mit einer Transporteinrichtung zum Fördern des Schlamms zwischen einem Produkteintrag und einem Produktaustrag, und einer Heizeinrichtung zum Aufheizen des Schlamms in der Transporteinrichtung vor, wobei die Transporteinrichtung wenigstens einen Trog umfaßt und wobei in einem Innenraum des wenigstens einen Trogs eine Transportschnecke mit Schneckenflügeln zum Umwälzen und Fördern des Schlamms angeordnet ist, welche durch eine Einrichtung zum Verhindern oder Behindern des Eindringens von kälterer Luft in einen beheizten Bereich der Transporteinrichtung gekennzeichnet ist. Die Erfindung kann insbesondere eine solche Vorrichtung vorsehen, welche dadurch gekennzeichnet ist, daß eine Eintragsschleuse, vorzugsweise im Bereich des Produkteintrags, und eine Austragsschleuse, vorzugsweise im Bereich des Produktaustrags, zum luftdichten Abschließen eines Förderraums angeordnet sind, der sich in der Transporteinrichtung zwischen dem Produkteintrag und dem Produktaustrag erstreckt. Das luftdichte Abschließen des Förderraums mit Hilfe der Eintrags- und der Austragsschleuse verhindert beim Absaugen der Brüden aus den Trögen, daß Falschluft angesaugt wird. Falschluft umfaßt in diesem Zusammenhang jegliche Luft, insbesondere Umgebungsluft der Vorrichtung zum Trocknen, deren Temperatur sich wesentlich von der Betriebstemperatur in den Trögen unterscheidet. In den Trögen herrscht beispielsweise eine Betriebstemperatur von ca. 300° C. Die Umgebungstemperatur der Vorrichtung kann je nach Jahreszeit zwischen +30° C und etwa -10° C liegen. Der Eintritt von Falschluft in die Tröge hat somit eine enorme Kühlwirkung und ist kontraproduktiv. Mit Hilfe der Eintrags- und Austragsschleuse wird einerseits der Eintritt derartiger kühlender Falschluft verhindert. Andererseits verhindern die Eintrags- und die Austragsschleuse den Austritt warmer Luft aus den Trögen. Hierdurch wird insgesamt der Wirkungsgrad der Vorrichtung zum Trocknen des Schlamms verbessert. Darüber hinaus genügt aufgrund des luftdichten Abschluß des Förderraums ein geringer Unterdruck, um die Brüden abzusaugen. Diese Vorrichtung kann insbesondere mehrere Transportschnecken, wie vorangehend beschrieben, aufweisen.

Um mit Hilfe eines geringen mechanischen Aufwands eine gemeinsame Drehung der Paddelwelle und der Transportschnecke zu erreichen, sieht eine zweckmäßige Fortbildung der Erfindung vor, daß die Paddel selbst mechanisch an die Transportschnecke gekoppelt ist.

Eine Übertragung einer Drehbewegung der Paddelwelle auf die zumindest eine weitere Paddelwelle ist bei einer zweckmäßigen Ausgestaltung der Erfindung dadurch erreicht, daß die zumindest eine weitere Paddelwelle an die Paddelwelle mechanisch gekoppelt ist, so daß die zumindest eine weitere Paddelwelle und die Paddelwelle gemeinsam drehbar sind.

Die Erfindung stellt weiterhin eine Vorrichtung zum Trocknen von Schlamm, insbesondere Klär- oder Faulschlamm, mit einer Transporteinrichtung zum Fördern des Schlamms zwischen einem Produkteintrag und einem Produktaustrag und einer Heizeinrichtung zum Aufheizen des Schlamms in der Transporteinrichtung, wobei die Transporteinrichtung wenigstens einen Trog umfaßt und wobei in einem Innenraum des wenigstens einen Trogs eine Transportschnecke mit Schneckenflügeln zum Umwälzen und Fördern des Schlamms angeordnet ist, zur Verfügung, welche dadurch gekennzeichnet ist, daß, einem oder mehreren Trögen vorgeschaltet, insbesondere in einem Verbindungsabschnitt der Transporteinrichtung zwischen benachbarten Trögen, eine Zerkleinerungseinrichtung angeordnet ist. Dadurch kann der Schlamm vor dem Eintritt in einen Trog oder beim Übergang zwischen benachbarten Trögen zusätzlich zerkleinert werden, um wiederum insgesamt die Größe der Schlammpartikel zu vermindern, die von dem Produkteintrag zum Produktaustrag befördert werden. Kleinere Schlammpartikel haben den Vorteil, daß sie effizienter getrocknet werden können. Auch diese Ausführungsform der Erfindung kann mit mehreren Transportschnecken und/oder einem isolierten Bereich der Transporteinrichtung, z.B. mit einer Eintragsschleuse und einer Austragsschleuse, versehen sein, wie dies vorangehend beschrieben wurde.

Vorteilhaft weist die Zerkleinerungseinrichtung wenigstens zwei Messerwalzen auf, die zueinander gegenläufig drehbar sind. Hierdurch wird die Zerkleinerungseinrichtung mit Hilfe mechanisch einfacher und leistungsfähiger Mittel gebildet.

Zweckmäßig kann vorgesehen sein, daß die wenigstens zwei Messerwalzen in einer Ebene benachbart zueinander angeordnet sind, die sich im wesentlichen in einer Längsrichtung der benachbarten Tröge erstreckt. Hierdurch werden von der Zerkleinerungseinrichtung alle Schlammpartikel erfaßt, die von einem der benachbarten Tröge in den darunterliegenden Trog fallen.

Es kann weiterhin vorgesehen sein, daß die Vorrichtung mehrere Tröge aufweist, die in einer oder mehreren Kaskaden angeordnet sind, und/oder die Tröge und/oder die eine oder mehreren Kaskaden parallel betrieben werden können. Die parallel betriebenen Tröge oder Kaskaden bilden somit mehrere Trocknungspfade und können insbesondere unabhängig voneinander betrieben werden.. Dies hat den Vorteil, daß, wenn eine technische Störung innerhalb eines Trocknungspfades auftritt, dieser separat abgeschaltet und der Betrieb der Trocknungsvorrichtung mit einer verminderten Leistung fortgesetzt werden kann.

Die Erfindung stellt insbesondere eine Vorrichtung zum Trocknen von Schlamm, insbesondere Klär- oder Faulschlamm, mit einer Transporteinrichtung zum Fördern des Schlamms zwischen einem Produkteintrag und einem Produktaustrag und mit einer Heizeinrichtung zum Aufheizen des Schlamms in der Transporteinrichtung zur Verfügung, wobei die Transporteinrichtung mehrere Tröge umfaßt und wobei in einem Innenraum der Tröge eine oder mehrere Transportschnecken mit Schneckenflügeln zum Umwälzen und Fördern des Schlamms angeordnet sind, welche dadurch gekennzeichnet ist, daß die Tröge in zwei oder mehreren parallelen Kaskaden angeordnet sind, in denen jeweils die Tröge hintereinander angeordnet sind, so daß jeder Trog von einem vorangehenden Trog Schlamm empfängt und/oder an einen nachfolgenden Trog Schlamm abgibt, wobei zumindest zwei Kaskaden unabhängig voneinander betreibbar sind.

Ferner kann vorgesehen sein, daß jeder Trog einen eigenen separaten Antrieb aufweist. Dadurch kann insbesondere der Betrieb eines Troges in einer Kaskade unabhängig von den anderen Trögen der jeweiligen Kaskade gestoppt bzw. die Drehrichtung der Transportschnecken umgekehrt werden, wodurch man abhängig von der Beschaffenheit des Schlammes geeignete Trocknungsprogramme durchführen kann.

Es ist zweckmäßig, daß auch die Zufuhr des zu trocknenden Schlamms zu einer Kaskade unabhängig von einer anderen Kaskade abgestellt bzw. vermindert werden kann. Dadurch kann einerseits die Schlammzuführung gestoppt werden, um diese Kaskade zwecks Reparatur zu entleeren, und andererseits kann über die Anpassung der Schlammenge der Trocknungsverlauf an die individuellen Gegebenheiten in den verschiedenen Kaskaden angepaßt werden.

Die Erfindung wird im Folgenden anhand eines Ausführungsbeispiels unter Bezugnahme auf eine Zeichnung näher erläutert. Hierbei zeigen:
- Figur 1: eine schematische Darstellung einer Trocknungsanlage für Schlamm;
- Figur 2: eine schematische Darstellung einer Kaskade einer Trocknungsanlage von der Seite;
- Figur 3: eine schematische Darstellung von zwei nebeneinander angeordneten Kaskaden einer Trocknungsanlage; und
- Figur 4: eine schematische Darstellung von zwei nebeneinander angeordneten Trögen in Draufsicht.

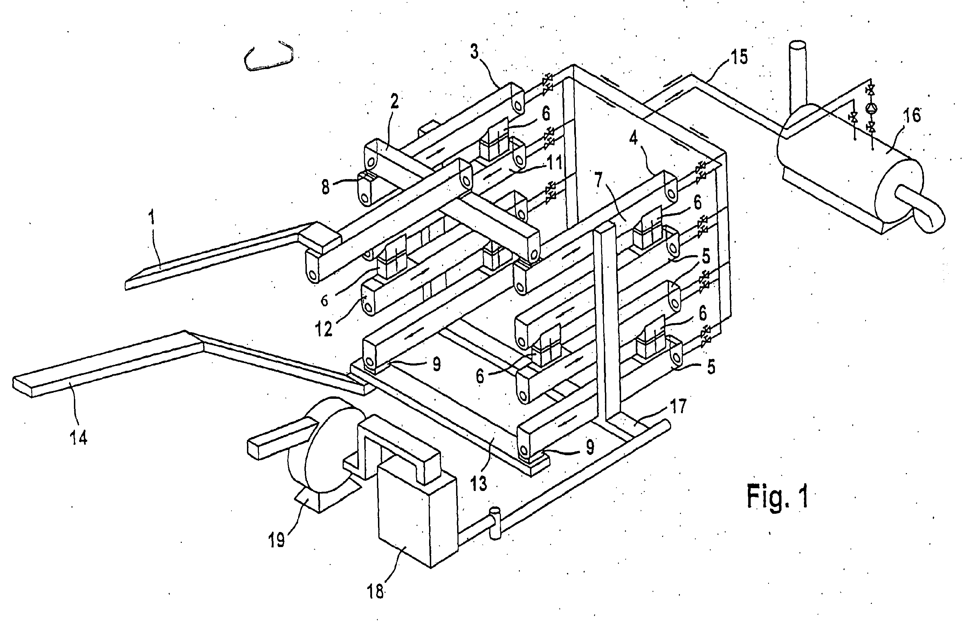

Figur 1 ist eine schematische Darstellung einer Vorrichtung zum Trocknen von Schlamm, insbesondere Faul- oder Klärschlamm. Von einem Vorlagebehälter gelangt der zu trocknende Schlamm über eine Zuführeinrichtung 1 zu einer Verteilereinrichtung 2. Mit Hilfe der Verteilereinrichtung 2 wird der Schlamm auf zwei Kaskaden 3, 4 verteilt, die jeweils vier Tröge 5 aufweisen. Die Tröge 5 bilden zusammen mit Verbindungsabschnitten 6, die jeweils zwischen benachbarten der Tröge 5 angeordnet sind, einen Förderraum 7. Durch den Förderraum 7 hindurch wird der über die Verteilereinrichtung 2 eingebrachte Schlamm von einem Produkteintrag 8 zu einem Produktaustrag 9 befördert. Der Schlamm wird hierbei in den Trögen 5 mit Hilfe von Transportschnecken (nicht dargestellt) vorwärts transportiert und fällt durch den jeweiligen Verbindungsabschnitt 6 aus einem oberen Trog 11 in einen unteren Trog 12.

Der durch den Produktaustrag 9 in eine Aufnahmeeinrichtung 13 gelangende getrocknete Schlamm wird über ein Rohrsystem 14 zu einer Trockengutverladung abgeleitet.

Zur Trocknung des Schlamms werden die Tröge 5 beheizt. Zu diesem Zweck werden die Tröge 5 über eine Rohrleitungssystem 15 mit einem Medium versorgt, das mit Hilfe einer Heizeinrichtung 16 erhitzt wird. Das erhitzte Medium fließt dann durch Trogwände, die zu diesem Zweck doppelwandig ausgebildet sind. Der Schlamm in den Trögen 5 wird auf diese Weise erhitzt und getrocknet. Die bei der Trocknung des Schlamms entstehenden Brüden werden mit Hilfe eines Absaugsystems 17 abgesaugt, welches mit einer Saugeinrichtung 19 und einem Brüdenwäscher 18 verbunden ist. Das Absaugsystem 17 ist mit jedem der Tröge 5 verbunden. Das Heizmedium ist vorzugsweise ein Thermalöl, kann aber auch ein Heizgas sein. In der derzeit bevorzugten Ausführungsform wird das Heizmedium mit einer Temperatur von ca. 300°C zugeleitet und mit einer Temperaturdifferenz von ca. 40°C abgeleitet. Anders als in Fig. 1 dargestellt, können die Brüden auch in einem Abzugsschacht gesammelt werden, der sich über die obersten Tröge der Kaskaden 3, 4 hinaus erstreckt, und von dessen oberem Ende zu dem Brüdenwäscher 18 geleitet werden.

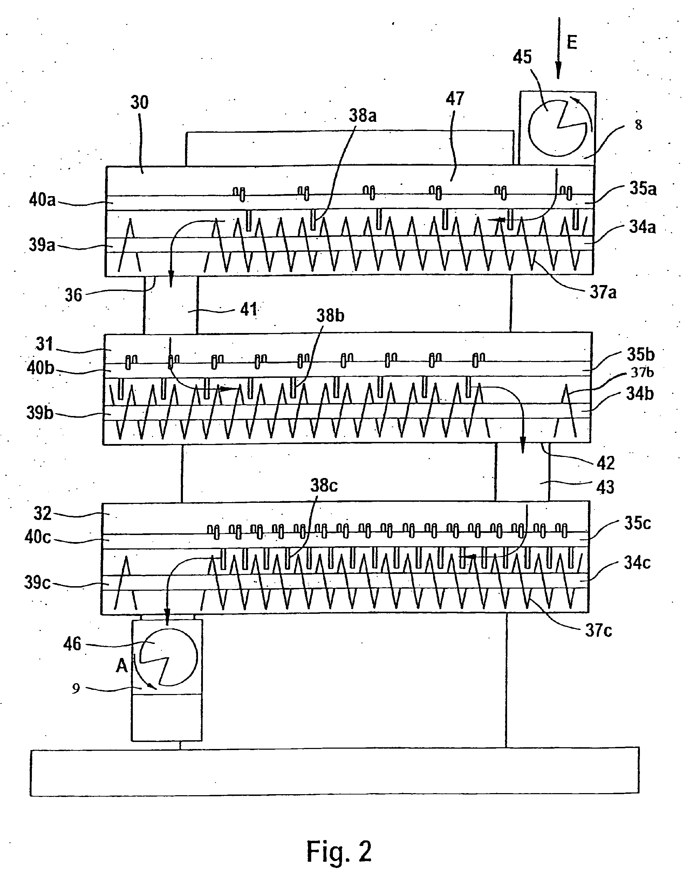

In Figur 2 zeigt eine Kaskade mit drei übereinander angeordneten Trögen 30, 31, 32. Der zu trocknende Schlamm gelangt über einen Produkteintrag 8 in einen oberen Trog 30. In dem oberen Trog sind eine Transportschnecke 34a zum Fördern des eingebrachten Schlamms und eine Padelwelle 35a zum Umwälzen des eingebrachten Schlamms übereinander angeordnet. Mit Hilfe der Transportschnecke 34a wird der eingebrachte Schlamm zu einem Trogaustrag 36 des oberen Trogs 30 befördert. Hierbei wird der Schlamm mit Hilfe der Transportschnekke 34a und der Paddelwelle 35a kontinuierlich umgewälzt und durchmischt. Durch den Kontakt mit den beheizten Trogwänden wird der Schlamm getrocknet.

Es kann weiterhin vorgesehen sein, daß zum Trocknen des Schlamms Schneckenflügel 37a der Transportschnecken 34a und/oder Paddel 38a der Paddelwellen 35a doppelwandig ausgebildet sind und von dem erhitzten Medium durchströmt werden, um die Kontaktfläche zwischen dem Schlamm und den erhitzten Bestandteilen der Vorrichtung zum Trocknen zu erhöhen. Des weiteren können auch eine Welle 39a der Transportschnecke 34a und eine Welle 40a der Paddelwelle 35a jeweils doppelwandig ausgebildet sein, um von dem erhitzten Medium durchströmt zu werden.

Gemäß Figur 2 greifen die Schneckenflügel 37a der Transportschnecken 34a und die Paddel 38a der Paddelwellen 35a wenigstens teilweise ineinander. Beim gegenläufigen Drehen der Transportschnecken 34a und der Paddelwelle 35a durchkämmen sich die Schneckenflügel 37a und die Paddel 38a. Hierdurch wird die Schichtdicke des Schlamms in einem Raum zwischen den Schneckenflügeln 37a und den Paddeln 38a im Vergleich zu einem Trog mit nur einer einzigen Transportschnecke im wesentlichen halbiert. Diese Halbierung der Schichtdicke führt zu einer effektiveren Wärmeübertragung von den beheizten Teilen der Tröge auf den zu trocknenden Schlamm.

Nach dem Durchtritt durch den Trogaustrag 36 gelangt der Schlamm in einen oberen Zwischenabschnitt 41 und fällt durch diesen hindurch in einen mittleren Trog 31. In dem mittleren Trog 31 wird der Schlamm mit Hilfe der Transportschnecke 34b in einer Richtung gefördert, die zu einer Förderrichtung in dem oberen Trog 30 entgegengesetzt ist. Eine Paddelwelle 35b dient zum Umwälzen des Schlamms. Durch einen Trogaustrag 42 des mittleren Trogs 30 und einen unteren Verbindungsabschnitt 43 hindurch gelangt der Schlamm dann in einen unteren Trog 32. In dem unteren Trog wird der Schlamm wiederum mit Hilfe der Transportschnecke 34c gefördert und gelangt auf diese Weise zu einem Produktaustrag 9. Eine Paddelwelle 35c unterstützt das Umwälzen des zu trocknenden Schlamms.

Hinsichtlich der Ausbildung und des Zusammenwirkens von Schneckenflügeln 37b, 37c der Transportschnecken 34b bzw. 34c und von Paddeln 38b, 38c der Paddelwellen 35b, 35c gelten die Ausführungen in Verbindung mit den Schneckenflügeln 37a und den Paddeln 38a entsprechend.

Wie sich aus Figur 2 ergibt, ist der Abstand zwischen benachbarten Paddeln der Paddel 38b auf der Paddelwelle 35b geringer als der Abstand zwischen benachbarten Paddeln der Paddel 38a auf der Paddelwelle 35a, so daß die Anzahl der Paddel 38b größer als die Anzahl der Paddel 38a ist. Die gleiche Aussage gilt im Verhältnis der Paddel 38c auf der Paddelwelle 35c und der Paddel 38b auf der Paddelwelle 35b. Die Erhöhung der Anzahl von Paddeln in aufeinanderfolgenden Trögen hat den Vorteil, daß Partikel des Trockenguts, die in einem der Tröge unter Einwirkung der Paddelwelle erzeugt wurden, in dem hierauf folgenden Trog mit Hilfe einer Paddelwelle weiter zerkleinert werden, die bei gleicher Länge wie die Paddelwelle in dem vorhergehenden Trog jedoch eine höhere Anzahl von Paddeln aufweist. Auf diese Weise wird das Trockengut Stück für Stück zerkleinert. Grundsätzlich ist die Anzahl und die Positionierung der Paddel 38a, 38b bzw. 38c an die Steigung der Transportschnecken 35a, 35b bzw. 35c angepaßt, so daß ein gegenseitiges Durchkämmen der Paddel 38a, 38b bzw. 38c und der Schneckenflügel 37a, 37b bzw. 37c gewährleistet ist.

Der Produkteintrag 8 und der Produktaustrag 9 werden mit Hilfe einer Eintragsschleuse 45 bzw. einer Austragsschleuse 46 geöffnet und geschlossen. Mit Hilfe der Eintragsschleuse 45 und der Austragsschleuse 46 ist ein Förderraum 47 luftdicht abschließbar, der sich zwischen dem Produkteintrag 8 und dem Produktaustrag 9 durch die Tröge 30, 31, 32 und den oberen und den unteren Verbindungsabschnitt 41, 43 hindurch erstreckt. Hierdurch wird verhindert, daß Falschluft, insbesondere Umgebungsluft in den Förderraum 47 gelangt. In dem Förderraum 47 wird mit Hilfe des Beheizens der Tröge und optional des Beheizens der Transportschnecken 34a-34c und/oder der Paddelwellen 35a-35c eine sehr hohe Temperatur, vorzugsweise etwa 300° C, zum Trocknen des Schlamms erzeugt. Das Eindringen von Falschluft, beispielsweise von Umgebungsluft, hat eine Kühlwirkung und wirkt bei der Trocknung des Schlamms kontraproduktiv.

Das luftdichte Abschließen des Förderraums 47 mit Hilfe der Eintragsschleuse 45 und der Austragsschleuse 46 dient weiterhin der Verbesserung der Sicherheit beim Betreiben der Vorrichtung zum Trocknen von Schlamm. Bei der Klärschlammtrocknung kommt es zur Feinstaubentwicklung. Dieser Feinstaub lagert sich in den Trögen 30, 31, 32 und in dem Absaugsystem 17 (vgl. Figur 1) ab. Der Feinstaub beginnt bereits bei ca. 120° C unter Wärmeentwicklung zu oxidieren. Dies kann zu gefürchteten und gefährlichen Feinstaubverpuffungen und Anlagebränden führen. Dieses wird mit Hilfe der Eintragsschleuse 47 und der Austragsschleuse 46 dadurch verhindert, daß keine Luft in die Tröge 30, 31, 32 und das Absaugsystem 17 gelangt, so daß hierin nur Brüden, d.h. gesättigter Dampf vorhanden ist. Somit wird die Sicherheit von Klärschlammtrocknungseinheiten wesentlich verbessert.

Die Eintragsschleuse 45 kann zweckmäßig als eine Dosierschleuse ausgebildet sein, um die Menge des einzubringenden Schlamms steuern zu können.

Um den Wirkungsgrad noch weiter zu verbessern, kann das Absaugsystem 17 gegenüber der Außenluft und/oder dem Förderraum 47 durch geeignete Maßnahmen, z.B. Ventile, Schleusen oder dgl., isoliert sein, so daß auch über das Absaugsystem keine Falschluft eintreten kann. Es wird darauf hingewiesen, daß die Eintragsschleuse 45 und die Austragsschleuse 46 zum luftdichten Abschließen des Förderraums 47 auch bei einer Trocknungsvorrichtung vorgesehen sein kann, bei der in den Trögen nur eine einzige Transportschnecke angeordnet ist, wie es aus dem Stand der Technik bekannt ist. Die vorteilhafte Wirkung des luftdichten Abschließens des Förderraums 47 mit Hilfe der Eintragsschleuse 45 und der Austragsschleuse 46 ist auch in diesem Fall ohne Einschränkung gegeben. Hierbei handelt es sich dann um eine Vorrichtung zum Trocknen von Schlamm, insbesondere Klär- oder Faulschlamm, mit einer Transporteinrichtung zum Fördern des Schlamms zwischen einem Produkteintrag und einem Produktaustrag durch einen Förderraum hindurch, und einer Heizeinrichtung zum Aufheizen des Schlamms in der Transporteinrichtung, die dadurch gekennzeichnet ist, daß ein Förderraum zwischen Produkteintrag und Produktaustrag mit Hilfe einer Eintragsschleuse und einer Austragsschleuse luftdicht abgeschlossen werden kann. Insbesondere kann der Produkteintrag mit der Eintragsschleuse und der Produktaustrag mit der Austragsschleuse verschlossen sein.

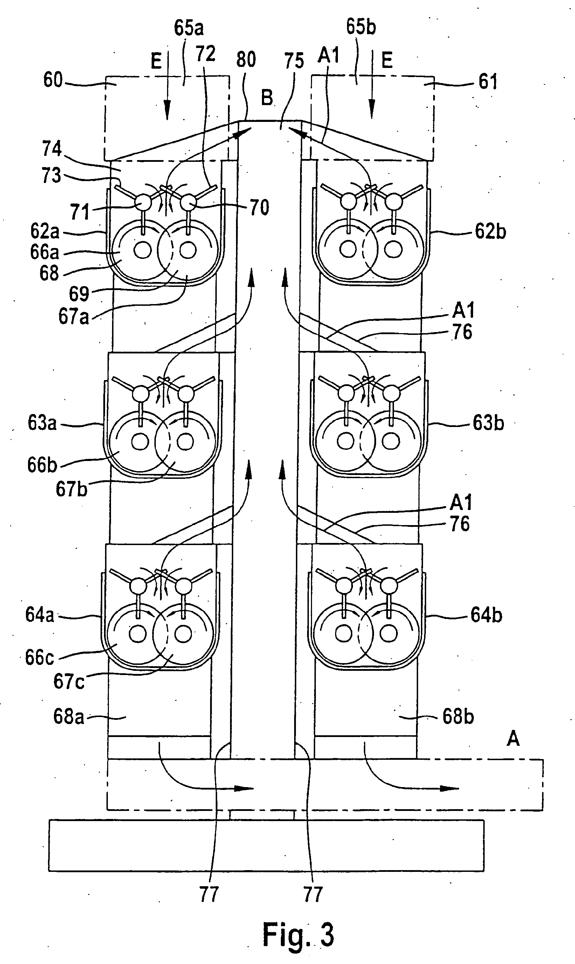

Figur 3 zeigt eine Seitendarstellung mit zwei Kaskaden 60, 61, die jeweils drei Tröge 62a, 63a, 64a bzw. 62b, 63b, 64b aufweisen. Die Kaskaden 60, 61 können beispielsweise der Troganordnung mit den Trögen 30, 31, 32 nach Figur 2 entsprechen. Der zu trocknende Schlamm gelangt durch einen Produkteintrag 65a bzw. 65b in die jeweilige Kaskade 60, 61 und wird in den Trögen 62a, 63a, 64a bzw. 62b, 63b, 64b jeweils mit Hilfe einer Transportschnecke 66a, 66b bzw. 66c und einer weiteren Transportschnecke 67a, 67b bzw. 67c gefördert. Der zu trocknende Schlamm gelangt schließlich in der jeweiligen Kaskade 60, 61 zu einem Produktaustrag 68a bzw. 68b.

Weitere Details werden im folgenden in Verbindung mit dem Trog 62a beschrieben, gelten für die andere Tröge 63a, 64a, 62b, 63b und 64b jedoch entsprechend. Wie in Figur 3 dargestellt, sind in dem Trog 62a die Transportschnecke 66a und die weitere Transportschnecke 67a nebeneinander in einer horizontalen Ebene liegend angeordnet. Schneckenflügel 68 der Transportschnecke 66a und Schneckenflügel 69 der weiteren Transportschnecke 67a kämmen beim Umwälzen de Schlamms ineinander. Oberhalb der Transportschnecke 66a und der weiteren Transportschnecke 67a ist jeweils eine Paddelwelle 70 bzw. 71 zum Umwälzen und Zerkleinern des zu trocknenden Schlamms so angeordnet, daß eine mittlere Längsachse der Paddelwellen 70, 71 jeweils parallel zu einer mittleren Längsachse der Transportschnecke 66a bzw. der weiteren Transportschnecke 67a verlaufen. Die Paddelwellen 70, 71 sind ebenfalls in einer horizontalen Ebene angeordnet, die oberhalb der horizontalen Ebene liegt, in welcher die Transportschnecke 66a und die weitere Transportschnecke 67a angeordnet sind. Paddel 72, 73 der Paddelwellen 70, 71 kämmen ineinander mit den Schneckenflügeln 68 bzw. 69 beim Umwälzen und Fördern des Trockenguts.

Mit Hilfe der Anordnung der Paddelwellen 70, 71 oberhalb der Transportschnecke 66a und der weiteren Transportschnecke 67a wird eine relativ hohe Schütthöhe in dem Trog 62a erreicht. Des weiteren führt diese Anordnung dazu, daß eine Ausdampffläche 74 möglichst gering ist. Die Ausdampffläche 74 bei der in Figur 3 dargestellten Anordnung der Transportschnecke 66a und der weiteren Transportschnecke 67a sowie den Paddelwellen 70, 71 zueinander ist im Vergleich zu der Ausdampffläche bei einem Trog, in dem nur zwei Transportschnecken angeordnet und Paddelwellen gar nicht vorgesehen sind, nicht vergrößert.

Mit Hilfe von Pfeilen A1 ist in Figur 3 gezeigt, wie die Brüden mit Hilfe einer Absaugeinrichtung 80 über die Ausdampfflächen 74 abgesaugt werden. Je kleiner die Ausdampffläche 74 ist, um so geringer ist der Aufwand, der betrieben werden muß, um ein effektives Absaugen der Brüden in dem Trog 62a zu gewährleisten. Wie aus Fig. 3 ersichtlich ist, werden die Brüden der beiden Kaskaden 60, 61 in einem gemeinsamen Abluftkanal 75 geleitet, der zwischen den Kaskaden angeordnet ist. Dadurch, daß je eine Kaskade rechts und links von dem Abluftkanal 75 angeordnet ist, können die Brüden direkt von den jeweiligen Trögen 62a bis 64a bzw. 62b bis 64b über geeignete Umlenkbleche 76 in den Abluftkanal 75 gelenkt werden, so daß lange Leitungswege für die Abluft vermieden werden. Der Abluftkanal 75 ist mit Hilfe von Kanalbauteilen 77 gebildet. Die Kanalbauteile 77 sind hinsichtlich der mechanischen Eigenschaften, insbesondere bezüglich eines verwendeten Materials und einer Materialstärke sowie einer Profilgestaltung, so ausgebildet, daß mittels der Kanalbauteile 77 ein Traggerüst gebildet ist, an dem die Tröge 62a, 63a, 64a bzw. 62b, 63b, 64b angeordnet sind. Die Kanalbauteile 77 erfüllen somit zwei sehr verschiedene Funktionen: Ausbilden des Abluftkanals 75 zum Abführen der Brüden und Ausbilden eines Traggerüsts für die Tröge 62a, 63a, 64a bzw. 62b, 63b, 64b. Hierdurch wird Material eingespart. Unabhängig von der konkreten Ausbildung der Tröge 62a, 63a, 64a bzw. 62b, 63b, 64b und der hierin angeordneten Umwälz/Trocknungsbauteile, insbesondere der Anordnung und der Ausbildung der Paddelwellen 70, 71, ist mit Hilfe der beschriebenen Konstruktion der Kanalbauteile 77 eine Trocknungsanlage geschaffen, die gegenüber bekannten Anlagen den mittels der Kanalbauteile 77 gebildeten, multifunktionellen Abluftkanal 75 aufweist.

Die beiden Kaskaden 60, 61 können voneinander unabhängig betrieben werden. Hierfür kann sowohl vorgesehen sein, daß die einzelnen Tröge jeweils einen individuellen Antrieb besitzen, der unabhängig zumindest von dem Antrieb der Tröge der jeweils anderen Kaskade betrieben werden kann, als auch, daß die Tröge jeder Kaskade einen gemeinsamen Antrieb besitzen, der unabhängig von dem Antrieb der anderen Kaskade betrieben werden kann. In beiden Fällen ist es möglich, die eine der beiden Kaskaden 60 bzw. 61 anzuhalten und die andere Kaskade 61 bzw. 60 weiter zu betreiben. Um zu verhindern, daß in einem solchen Fall flüssiger Schlamm in die stillgelegte Kaskade gelangt oder auch um eine Kaskade 60, 61 zu entleeren, wird die Zufuhr des zu trocknenden Klärschlamms über den Produkteintrag 65a bzw. 65b für jede Kaskade 60, 61 separat geregelt und kann insbesondere wahlweise für die eine oder andere Kaskade oder für beide Kaskaden zusammen unterbunden werden. Geeigneterweise wird die Abtrennung des Schlammeintrages in eine Kaskade durch einen Kugelhahn (nicht gezeigt) durchgeführt. Bei einer technischen Störung in einer der Kaskaden 60, 61 kann diese angehalten und die Anlage mit Hilfe der verbliebenen Kaskade 60, 61 mit halber Leistung weiter betrieben werden kann. Eine solche Funktion führt zu einer ganz wesentlichen Verbesserung der Verfügbarkeit des Trocknungsmoduls, da ein Defekt oder eine technische Störung nicht zu einem Totalausfall führt, wenn nicht beide Kaskaden 60, 61 betroffen sind. Unter Umständen kann die Reparatur sogar während des laufenden Betriebes der einsatzfähigen Kaskade 60, 61 der Trocknungsvorrichtung durchgeführt werden, so daß bei kontinuierlichem Anfall von zu trocknendem Schlamm der Schlamm nicht zwischengelagert oder eine weitere Trocknungsvorrichtung verwendet werden muß. Weiterhin eröffnet der separate Antrieb der Kaskaden die Möglichkeit, die Anlage z.B. bei geringem Anfall von zu trocknendem Schlamm mit Halblast zu betreiben.

Zur Verbesserung des Wirkungsgrads des Trocknungsprozesses des Schlamms kann vorgesehen sein, die Vorrichtung gemäß Figur 3 im sogenannten Pilgerschrittverfahren zu betreiben. Hierbei wird die Drehrichtung der Transportschnecke 66a und der weiteren Transportschnekke 67a jeweils kurzzeitig umgekehrt, was seinerseits zu einer Umkehr der Förderrichtung in dem jeweiligfen Trog führt, beispielsweise in dem Trog 62a. Die Umkehr der Drehrichtungen bewirkt einerseits ein verbessertes Umwälzen und Durchmischen des Schlamms. Andererseits ist es mit Hilfe dieses Verfahrens möglich, die Verweildauer des Schlamms in den Trögen zu steuern und hinsichtlich des Trocknungsprozesses zu optimieren.

Der Antrieb der Transportschnecken von hintereinander geschalteten Trögen in einer Kaskade kann dabei gekoppelt sein, so daß die Förderrichtung in den entsprechenden Trögen gleichzeitig umgekehrt wird. Es kann auch vorgesehen sein, daß die Tröge 30, 31, 32 (vgl. Figur 2) bzw. 62a, 63a, 64 und/oder 62b, 63b, 64 (vgl. Figur 3) jeweils eigene separate Antriebe aufweisen. Bei dieser Ausführungsform kann wahlweise die Förderrichtung von allen Transportschnecken in einer Kaskade umgekehrt werden oder auch nur die Förderrichtung von Transportschnecken in einem Teil der Tröge, beispielsweise nur in einem Trog, während die Förderrichtung bei den übrigen Trögen unverändert bleibt.

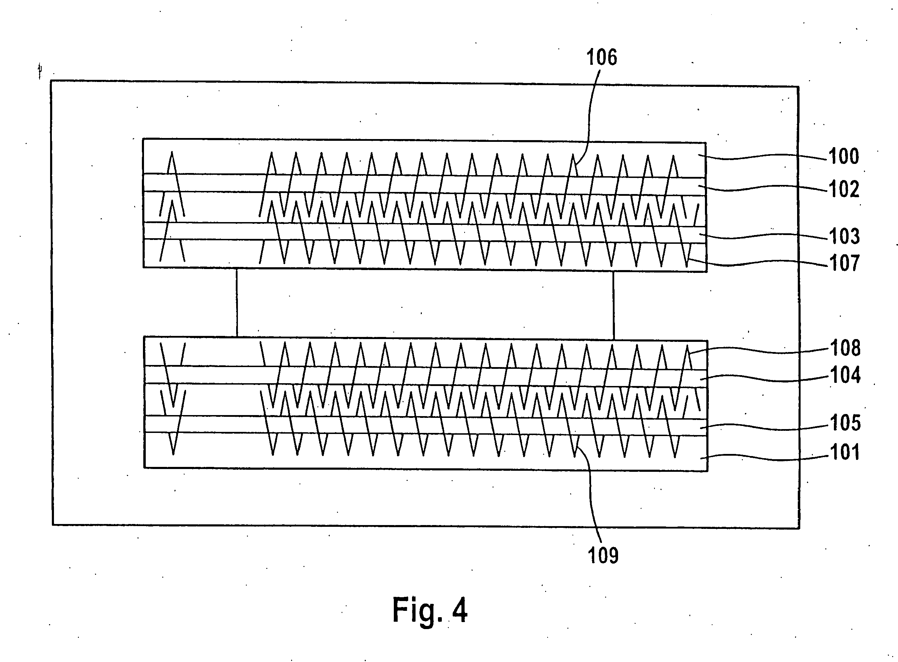

Figur 4 zeigt eine schematische Darstellung von zwei nebeneinander angeordneten Trögen 100, 101 mit jeweils zwei Transportschnecken 102, 103 bzw. 104, 105 von oben. Hierbei kann es sich beispielsweise um die Tröge 62a und 62b sowie die Transportschnecke 66a und die weiter Transportschnecke 67a handeln. Flügel 106, 107 bzw. 108,109 der jeweils zwei Transportschnecken 102, 103 bzw. 104, 105 kämmen beim Drehen ineinander, so daß die Schichtdicke des Trockenguts vermindert ist.

## Patentansprüche

1. Vorrichtung zum Trocknen von Schlamm, insbesondere Klär- oder Faulschlamm, mit einer Transporteinrichtung zum Fördern des Schlamms zwischen einem Produkteintrag (65a) und einem Produktaustrag (68a) und einer Heizeinrichtung zum Aufheizen des Schlamms in der Transporteinrichtung, wobei die Transporteinrichtung wenigstens einen Trog (62a) umfaßt und wobei in einem Innenraum des wenigstens einen Trogs (62a) eine Transportschnecke (66a) mit Flügeln (68) zum Fördern des Schlamms angeordnet ist, **dadurch gekennzeichnet, daß** im Innenraum des wenigstens einen Trogs (62a) wenigstens eine Paddelwelle (70) mit Paddeln (72) zum Umwälzen des Schlamms vorgesehen ist.

2. Vorrichtung nach Anspruch 1, **dadurch gekennzeichnet, daß** die Paddelwelle (70) oberhalb der Transportschnecke (66a) angeordnet ist.

3. Vorrichtung nach Anspruch 2, **dadurch gekennzeichnet, daß** beim Umwälzen des Schlamms die Paddel (72) der Paddelwelle (70) mit den Flügeln (68) der Transportschnecke (66a) ineinander greifen.

4. Vorrichtung nach einem der vorangehenden Ansprüche, **dadurch gekennzeichnet, daß** neben der Transportschnecke (66a) wenigstens eine weitere Transportschnecke (67a) vorgesehen ist, daß die Transportschnecke (66a) und die wenigstens eine weitere Transportschnecke (67a) in einer horizontalen Ebene nebeneinander angeordnet sind und daß oberhalb der wenigstens einen weiteren Transportschnecke (67a) zumindest eine weitere Paddelwelle (71) mit Paddeln (73) zum Umwälzen des Schlamms angeordnet ist.

5. Vorrichtung nach Anspruch 4, **dadurch gekennzeichnet, daß** beim Umwälzen des Schlamms die Paddel (72) der einen Paddelwelle (70) und die Paddel (73) der zumindest einen weiteren Paddelwelle (71) ineinander greifen.

6. Vorrichtung nach Anspruch 4 oder 5, **dadurch gekennzeichnet, daß** die Paddelwelle (70) oberhalb der Transportschnecke (66a) und die zumindest eine weitere Paddelwelle (71) oberhalb der wenigstens einen weiteren Transportschnecke (67a) so angeordnet sind, daß eine Mittelachse der Paddelwelle (70) in Längsrichtung und eine Mittelachse der Transportschnecke (66a) in Längsrichtung sowie eine Mittelachse der zumindest einen weiteren Paddelwelle (71) in Längsrichtung und eine Mittelachse der wenigstens einen weiteren Transportschnecke (67a) in Längsrichtung jeweils im wesentlichen in einer vertikalen Ebene liegen.

7. Vorrichtung nach einem der Ansprüche 4 bis 6, **dadurch gekennzeichnet, daß** die Paddel (73) der zumindest einen weiteren Paddelwelle (71) und die Flügel (69) der wenigstens einen weiteren Transportschnecke (67a) beim Umwälzen des Schlamms jeweils ineinander kämmen.

8. Vorrichtung nach einem der Ansprüche 4 bis 7, **dadurch gekennzeichnet, daß** die Transportschnecke (66a) und/oder die wenigstens eine weitere Transportschnecke (67a) jeweils als eine Schneckenwelle und die Flügel (68) bzw. (69) jeweils als Schneckenflügel ausgebildet sind.

9. Vorrichtung nach einem der Ansprüche 4 bis 8, **dadurch gekennzeichnet, daß** die Transportschnecke (66a) und die wenigstens eine weitere Transportschnecke (67a) mechanisch miteinander gekoppelt sind.

10. Vorrichtung nach Anspruch 9, **dadurch gekennzeichnet, daß** die Transportschnecke (66a) und die wenigstens eine weitere Transportschnecke (67a) so miteinander gekoppelt sind, daß die Transportschnecke (66a) und die wenigstens eine weitere Transportschnecke (67a) mit einer gemeinsamen Drehgeschwindigkeit drehbar sind.

11. Vorrichtung nach Anspruch 9 oder 10, **dadurch gekennzeichnet, daß** die Transportschnecke (66a) und die wenigstens eine weitere Transportschnecke (67a) so miteinander gekoppelt sind, daß eine Drehrichtung der Transportschnecke (66a) entgegengesetzt zu einer Drehrichtung der wenigstens einen weiteren Transportschnecke (67a) ausgebildet ist.

12. Vorrichtung nach einem der Ansprüche 9 bis 11, **dadurch gekennzeichnet, daß** die Transportschnecke (66a) und die wenigstens eine weitere Transportschnecke (67a) mittels einer Zahnradverbindung miteinander gekoppelt sind.

13. Vorrichtung nach Anspruch 12, **dadurch gekennzeichnet, daß** die Zahnradverbindung mit Hilfe eines Zahnradpaares ausgebildet ist, wobei das Zahnradpaar ein Übersetzungsverhältnis von 1:1 aufweist.

14. Vorrichtung nach einem der vorangehenden Ansprüche, **dadurch gekennzeichnet, daß** die Transportschnecke (66a) mit einem Aufsteckgetriebe zum Antreiben einer Drehbewegung der Transportschnecke (66a) kraftschlüssig verbunden ist.

15. Vorrichtung nach einem der vorangehenden Ansprüche, **dadurch gekennzeichnet, daß** die Drehrichtung der Transportschnecke (66a) mindestens kurzzeitig jeweils umkehrbar ist, so daß die Förderung des Schlamms wenigstens teilweise umgekehrt wird und/oder die Flügel (68) der Transportschnecke (66a) beheizt sind.

16. Vorrichtung nach einem der Ansprüche 4 bis 15, **dadurch gekennzeichnet, daß** die Drehrichtung der wenigstens einen weiteren Transportschnecke (67a) mindestens kurzfristig jeweils umkehrbar ist, so daß die Förderung des Schlamms wenigstens teilweise umgekehrt wird und/oder die Flügel (69) der wenigstens einen weiteren Transportschnecke (67a) beheizt sind.

17. Vorrichtung nach Anspruch 16, **dadurch gekennzeichnet, daß** die Flügel (68) der Transportschnecke (66a) und/oder die Flügel (69) der wenigstens einen weiteren Transportschnecke (67a) wenigstens in Teilbereichen jeweils doppelwandig ausgebildet sind, so daß die Flügel (68) der Transportschnecke (66a) und/oder die Flügel (69) der wenigstens einen weiteren Transportschnecke (67a) zum Beheizen von einem Medium durchströmt werden können.

18. Vorrichtung nach einem der vorangehenden Ansprüche, **dadurch gekennzeichnet, daß** der wenigstens eine Trog (62a) thermisch isoliert ist.

19. Vorrichtung nach einem der vorangehenden Ansprüche, **dadurch gekennzeichnet, daß** der Innenraum des wenigstens einen Trogs (62a) gegenüber einer Umgebung des Trogs (62a) luftdicht abgeschlossen ist.

20. Vorrichtung nach einem der vorangehenden Ansprüche, **dadurch gekennzeichnet, daß** die Paddelwelle (70) mechanisch an die Transportschnecke (66a) gekoppelt ist.

21. Vorrichtung nach einem der Ansprüche 4 bis 20, **dadurch gekennzeichnet, daß** die zumindest eine weitere Paddelwelle (71) an die Paddelwelle (70) mechanisch gekoppelt ist, so daß die zumindest eine weitere Paddelwelle (71) und die Paddelwelle (70) gemeinsam drehbar sind.

## Claims

1. Assembly for drying sludge, in particular sewage sludge or digested sludge, with a conveying device for conveying the sludge between a product inlet (65a) and a product outlet (68a) and with a heating device for heating the sludge in the conveying device, the conveying device comprising at least one trough (62a), and a conveying screw (66a) having flights (68) for conveying the sludge being arranged within an inner space of the at least one trough (62a), **characterized in that** at least one paddle shaft (70) having paddles (72) for turning over the sludge is provided within the inner space of the at least one trough (62a).

2. Assembly according to Claim 1, **characterized in that** the paddle shaft (70) is arranged above the conveying screw (66a).

3. Assembly according to Claim 2, **characterized in that**, when turning over the sludge, the paddles (72) of the paddle shaft (70) interengage with the flights (68) of the conveying screw (66a).

4. Assembly according to one of the preceding claims, **characterized in that**, in addition to the conveying screw (66a), at least one further conveying screw (67a) is provided, **in that** the conveying screw (66a) and the at least one further conveying screw (67a) are arranged next to one another in a horizontal plane, and **in that** at least one further paddle shaft (71) having paddles (73) for turning over the sludge is arranged above the at least one further conveying screw (67a).

5. Assembly according to Claim 4, **characterized in that**, when turning over the sludge, the paddles (72) of the one paddle shaft (70) and the paddles (73) of the at least one further paddle shaft (71) interengage.

6. Assembly according to Claim 4 or 5, **characterized in that** the paddle shaft (70) is arranged above the conveying screw (66a) and the at least one further paddle shaft (71) is arranged above the at least one further conveying screw (67a) in such a way that a centre axis of the paddle shaft (70) in the longitudinal direction and a centre axis of the conveying screw (66a) in the longitudinal direction, and also a centre axis of the at least one further paddle shaft (71) in the longitudinal direction and a centre axis of the at least one further conveying screw (67a) in the longitudinal direction, respectively lie substantially in a vertical plane.

7. Assembly according to one of Claims 4 to 6, **characterized in that** the paddles (73) of the at least one further paddle shaft (71) and the flights (69) of the at least one further conveying screw (67a) respectively intermesh when turning over the sludge,

8. Assembly according to one of Claims 4 to 7, **characterized in that** the conveying screw (66a) and/or the at least one further conveying screw (67a) are respectively designed as a screw shaft and the flights (68) and/or (69) are respectively designed as screw flights.

9. Assembly according to one of Claims 4 to 8, **characterized in that** the conveying screw (66a) and the at least one further conveying screw (67a) are mechanically coupled together.

10. Assembly according to Claim 9, **characterized in that** the conveying screw (66a) and the at least one further conveying screw (67a) are coupled together in such a way that the conveying screw (66a) and the at least one further conveying screw (67a) can be rotated with a common speed of rotation.

11. Assembly according to Claim 9 or 10, **characterized in that** the conveying screw (66a) and the at least one further conveying screw (67a) are coupled together in such a way that a direction of rotation of the conveying screw (66a) is designed to be opposite to a direction of rotation of the at least one further conveying screw (67a).

12. Assembly according to one of Claims 9 to 11, **characterized in that** the conveying screw (66a) and the at least one further conveying screw (67a) are coupled together by means of a gearwheel connection.

13. Assembly according to Claim 12, **characterized in that** the gearwheel connection is formed by a pair of gearwheels, the pair of gearwheels having a transmission ratio of 1:1.

14. Assembly according to one of the preceding claims, **characterized in that** the conveying screw (66a) is non-positively connected to a slip-on gear mechanism for imparting a driving rotary motion to the conveying screw (66a).

15. Assembly according to one of the preceding claims, **characterized in that** the direction of rotation of the conveying screw (66a) can in each case be reversed at least for a short time, so that the conveyance of the sludge is at least partially reversed, and/or the flights (68) of the conveying screw (66a) are heated.

16. Assembly according to one of Claims 4 to 15, **characterized in that** the direction of rotation of the at least one further conveying screw (67a) can in each case be reversed at least for a short time, so that the conveyance of the sludge is at least partially reversed, and/or the flights (69) of the at least one further conveying screw (67a) are heated.

17. Assembly according to Claim 16, **characterized in that**, the flights (68) of the conveying screw (66a) and/or the flights (69) of the at least one further conveying screw (67a) are respectively designed to be double-walled, at least in some regions, so that the flights (68) of the conveying screw (66a) and/or the flights (69) of the at least one further conveying screw (67a) can be traversed by a medium for heating purposes.

18. Assembly according to one of the preceding claims, **characterized in that** the at least one trough (62a) is thermally insulated.

19. Assembly according to one of the preceding claims, **characterized in that** the inner space of the at least one trough (62a) is sealed in an air-tight manner from the surrounding environment of the trough (62a).

20. Assembly according to one of the preceding claims, **characterized in that** the paddle shaft (70) is mechanically coupled to the conveying screw (66a).

21. Assembly according to one of Claims 4 to 20, **characterized in that** the at least one further paddle shaft (71) is mechanically coupled to the paddle shaft (70), so that the at least one further paddle shaft (71) and the paddle shaft (70) can be rotated jointly.

## Revendications

1. Appareil de séchage de boue, en particulier de boue de clarification ou sapropèle, comportant un dispositif de transport de la boue entre une entrée de produit (65a) et une sortie de produit (68a) et un dispositif de chauffage de la boue dans le dispositif de transport, le dispositif de transport comportant au moins une auge (62a), et à l'intérieur de l'auge ou de chaque auge (62a) étant placée une vis transporteuse (66a) à ailettes (68) pour le transport de la boue, **caractérisé par le fait qu'**à l'intérieur de l'auge ou de chaque auge (62a) est prévu au moins un arbre à pales (70) à pales (72) pour le recyclage de la boue.

2. Appareil selon la revendication 1, **caractérisé par le fait que** l'arbre à pales (70) est placé au-dessus de la vis transporteuse (66a).

3. Appareil selon la revendication 2, **caractérisé par le fait que** pendant le recyclage de la boue, les pales (72) de l'arbre à pales (70) s'engrènent avec les ailettes (68) de la vis transporteuse (66a).

4. Appareil selon l'une des revendications précédentes, **caractérisé par le fait qu'**à côté de la vis transporteuse (66a) est prévue au moins une autre vis transporteuse (67a), que la vis transporteuse (66a) et l'autre ou les autres vis transporteuses (67a) sont placées les unes à côté des autres dans un plan horizontal, et qu'au-dessus de l'autre ou de chaque autre vis transporteuse (67a) est placé un autre arbre à pales (71) à pales (73) pour le recyclage de la boue.

5. Appareil selon la revendication 4, **caractérisé par le fait que** pendant le recyclage de la boue, les pales (72) de l'arbre à pales (70) et les pales (73) de l'autre ou des autres arbres à pales (71) s'engrènent.

6. Appareil selon l'une des revendications 4 et 5, **caractérisé par le fait que** l'arbre à pales (70) est placé au-dessus de la vis transporteuse (66a) et l'autre ou chaque autre arbre à pales (71) est placé au-dessus de l'autre vis transporteuse (67a) associée de façon que l'axe médian de l'arbre à pales (70), dans la direction longitudinale, et l'axe médian de la vis transporteuse (66a), dans la direction longitudinale, de même que l'axe médian de l'autre ou de chaque autre arbre à pales (71), dans la direction longitudinale, et l'axe médian de l'autre vis transporteuse (67a) associée, dans la direction longitudinale, soient situés sensiblement dans un plan vertical.

7. Appareil selon l'une des revendications 4 à 6, **caractérisé par le fait que** les pales (73) de l'autre ou de chaque autre arbre à pales (71) et les ailettes (69) de l'autre vis transporteuse (67a) associée s'engrènent pendant le recyclage de la boue.

8. Appareil selon l'une des revendications 4 à 7, **caractérisé par le fait que** la vis transporteuse (66a) et/ou l'autre ou les autres vis transporteuses (67a) sont des arbres de vis et les ailettes (68) ou (69) sont des ailettes de vis.

9. Appareil selon l'une des revendications 4 à 8, **caractérisé par le fait que** la vis transporteuse (66a) et l'autre ou les autres vis transporteuses (67a) sont accouplées mécaniquement.

10. Appareil selon la revendication 9, **caractérisé par le fait que** sont accouplées, la vis transporteuse (66a) et l'autre ou les autres vis transporteuses (67a) sont montées rotatifs de façon à avoir la même vitesse de rotation.

11. Appareil selon l'une des revendications 9 et 10, **caractérisé par le fait que** la vis transporteuse (66a) et l'autre ou les autres vis transporteuses (67a) sont accouplées de façon que le sens de rotation de la vis (66a) soit opposé à celui de la vis ou des vis (67a).

12. Appareil selon l'une des revendication 9 à 11, **caractérisé par le fait que** la vis transporteuse (66a) et l'autre ou les autres vis transporteuses (67a) sont accouplées par des roues dentées.

13. Appareil selon la revendication 12, **caractérisé par le fait que** l'accouplement par roues dentées est réalisé par une paire de roues dentées dont le rapport de transmission est de 1:1.

14. Appareil selon l'une des revendications précédentes, **caractérisé par le fait que** la vis transporteuse (66a) est jointe à force à un mécanisme à emboîtement pour la production de son mouvement de rotation.

15. Appareil selon l'une des revendications précédentes, **caractérisé par le fait que** le sens de rotation de la vis transporteuse (66a) peut être inversé au moins pendant de courtes durées, de sorte que le transport de la boue est inversé au moins partiellement, et/ou les ailettes (68) de la vis transporteuse (66a) sont chauffées.

16. Appareil selon l'une des revendications 4 à 15, **caractérisé par le fait que** le sens de rotation de l'autre ou des autres vis transporteuses (67a) peut être inversé au moins pendant de courtes durées, de sorte que le transport de la boue est inversé au moins partiellement, et/ou les ailettes (68) de l'autre ou des autres vis transporteuses (67a) sont chauffées.

17. Appareil selon la revendication 16, **caractérisé par le fait que** les ailettes (68) de la vis transporteuse (66a) et/ou les ailettes (69) de l'autre ou des autres vis transporteuses (67a) sont à double paroi au moins dans certaines parties, de sorte que les ailettes (68) et/ou les ailettes (69) peuvent être parcourues par un fluide pour le chauffage.

18. Appareil selon l'une des revendications précédentes, **caractérisé par le fait que** l'auge ou chaque auge (62a) est isolée thermiquement.

19. Appareil selon l'une des revendications précédentes, **caractérisé par le fait que** l'intérieur de l'auge ou de chaque auge (62a) est isolé de manière étanche à l'air de l'environnement de celle-ci.

20. Appareil selon l'une des revendications précédentes, **caractérisé par le fait que** l'arbre à pales (70) est accouplé mécaniquement à la vis transporteuse (66a).

21. Appareil selon l'une des revendications 4 à 20, **caractérisé par le fait que** l'autre ou chaque autre arbre à pales (71) est accouplé mécaniquement à l'arbre à pales (70), de sorte que le ou les premiers (71) et le second (70) peuvent tourner ensemble.
